# EUROPÄISCHE PATENTANMELDUNG

(11) **EP 3 838 545 A1**
(43) Veröffentlichungstag der Anmeldung: **23.06.2021**
(21) Anmeldenummer: 19217023.1
(22) Anmeldetag: 17.12.2019
(51) Int. Cl.: B29C 44/34, C08G 18/40, C08G 18/76, C08J 9/12

(54) **POLYOLMISCHUNGEN UND DEREN VERWENDUNG IN DER HERSTELLUNG FEINZELLIGER POLYURETHANSCHÄUME**

(71) Anmelder: Covestro Deutschland AG, 51373 Leverkusen (DE); Universität Stuttgart, 70174 Stuttgart (DE)
(72) Erfinder: HAHN, Christian, 51375 Leverkusen (DE); NEFZGER, Hartmut, 50259 Pulheim (DE); LORENZ, Klaus, 41539 Dormagen (DE); SOTTMANN, Thomas, 70597 Stuttgart (DE); TSENG, Shih-Yu, 70199 Stuttgart (DE); LÜLSDORF, Stefan, 70736 Fellbach (DE)
(74) Vertreter: Levpat

(57) **Zusammenfassung**

Die vorliegende Erfindung betrifft die Verwendung von Polyolmischungen mit besonders niedrigen CO2-Löslichkeiten zur Herstellung von feinzelligen Polyurethanschäumen auf Basis des POSME-Prinzips.

## Beschreibung

Die vorliegende Erfindung betrifft die Verwendung von Polyolmischungen mit besonders niedrigen CO₂-Löslichkeiten zur Herstellung von feinzelligen Polyurethanschäumen auf Basis des *POSME(Principle of Supercritical Microemulsion Expansion)-Prinzips.*

Polyurethan(PU)schäume mit Porengrößen im Nanometer-Bereich zeichnen sich durch eine besonders geringe Wärmeleitfähigkeit aus. Im Bereich der mittleren freien Weglänge des Zellgases (für Luft beispielsweise liegt diese bei ca. 78 nm) kommt der Knudsen-Effekt zum Tragen, der die Gaswärmeleitfähigkeit deutlich reduziert. Diese geringe Wärmeleitfähigkeit macht solche Schäume mit Porengrößen im Nanometer-Bereich zu idealen Materialien für die effiziente Wärmedämmung.

Mit konventionellen Schäummethoden sind solche feinporigen PU-Schaumstoffe jedoch nicht herstellbar. Das POSME-Prinzip (wie in DE 10260815 B4 beschrieben) bietet nun einen innovativen Ansatz, der in Zukunft die Herstellung solcher nanoporösen Schaumstoffe möglich machen könnte. Idee dabei ist ausgehend von treibmittelbasierten Mikroemulsionen, bei denen Treibmittel-Tröpfchen fein dispergiert vorliegen, zu schäumen. Die Durchmesser der Treibmittel-Tröpfchen liegen dabei im Nanometer-Bereich (1-10 nm). Durch Expansion dieser Tröpfchen wachsen diese zu Schaumporen heran, wobei es hier möglich sein sollte, dass der Durchmesser der finalen Schaumporen nicht viel größer als 100 nm beträgt. Damit wäre eine Grundvoraussetzung für den Knudsen-Effekt erreicht. Um ein gleichförmiges Anwachsen der Tröpfchen / Schaumporen zu gewährleisten, wird ein überkritisches Fluid verwendet (beispielsweise CO₂). So wird bei der Expansion kein Phasenübergang von flüssig nach gasförmig durchlaufen und damit erfolgt auch keine sprunghafte, sondern eine kontinuierliche Abnahme der Dichte des Treibmittels.

In der Vergangenheit konnte schon gezeigt werden, dass das POSME-Prinzip sich auch auf die Herstellung von Polyurethanschäumen übertragen lässt (DE 102009053218 A1). Dabei wird eine Polyol-*sc*CO₂-Mikroemulsion (*sc* = *supercritical*, überkritisch) hergestellt und diese dann mit Isocyanat vermischt, zur Reaktion gebracht und währenddessen expandiert. Hierbei konnten schon Polyurethan-Schäume mit Porendurchmessern im Mikrometer-Bereich hergestellt werden.

Aufgrund der hohen CO₂-Löslichkeit der Polyolformulierungen diffundiert aber während des Expansionsprozesses ein beträchtlicher Anteil an CO₂, welches im Polyurethanreaktivgemisch zunächst gelöst vorliegt, nach und nach durch Absenken der Löslichkeit infolge der Druckabnahme in die Schaumporen und vergrößert diese. Im gesamten Prozess muss folglich mit mehr CO₂ gearbeitet werden als wünschenswert, um oberhalb der Sättigungskonzentration von CO₂ im Polyol bei gegebenem Druck die Bildung der Treibmittel-Tröpfchen und damit die Bildung der Polyol-*sc*CO₂-Mikroemulsion zu gewährleisten.

Die Aufgabe der vorliegenden Erfindung war es daher, für die Herstellung von nanoporösen Polyurethanschaumstoffen mittels des POSME-Prinzips Polyole als Reaktionskomponente bereitzustellen, die besonders niedrige CO₂-Löslichkeiten aufweisen, dabei aber immer noch einen stabilen Schaum liefern.

Überraschenderweise wurde gefunden, dass die Gemische gemäß Anspruch 1 eine besonders niedrige CO₂-Löslickeit aufweisen, was eine entscheidende Grundvoraussetzung für die Umsetzung des POSME-Prinzips für die Herstellung von nanoporösen Polyurethanschaumstoffen ist.

Gegenstand der Erfindung sind Gemische aus Polyurethanreaktionskomponenten bestehend aus
(i) 0 bis 50 Gew.-% Polyesterpolyolen mit einer OH-Zahl von 200 bis 450 mg KOH/g, bevorzugt von 250 bis 400 mg KOH/g, einer zahlenmittleren Funktionalität f von 2,2 bis 4,5, bevorzugt von 2,5 bis 3,5, besonders bevorzugt von 2,8 bis 3,2 und einer Säurezahl von <6 mg KOH/g, bevorzugt <3 mg KOH/g, besonders bevorzugt <1 mg KOH/g, wobei die Polyesterpolyole erhältlich sind aus den Reaktionskomponenten bestehend aus
   a1) mindestens einer Dicarbonsäure ausgewählt aus der Gruppe bestehend aus Bernsteinsäure, Glutarsäure, Malonsäure, Äpfelsäure und Weinsäure
   a2) mindestens einer Dihydroxyverbindung ausgewählt aus der Gruppe bestehend aus Monoethylenglykol, Diethylenglykol und Polyethylenglykol und
   a3) mindestens einer Polyhydroxylverbindung ausgewählt aus der Gruppe bestehend aus Glycerin, Trimethylolpropan, Pentaerythrit und Sorbit
(ii) 10 bis 60 Gew.-% Polyetherpolyolen mit einer OH-Zahl von 350 bis 550 mg KOH/g, bevorzugt von 400 bis 500 mg KOH/g, einer zahlenmittleren Funktionalität f von 4 bis 6, bevorzugt von 4,5 bis 5, wobei die Polyetherpolyole erhältlich sind aus den Reaktionskomponenten bestehend aus
   b1) 40 bis 100 Gew.-% Ethylenoxid und 0 bis 60 Gew.-% Propylenoxid jeweils bezogen auf die Gesamtmenge an Alkylenoxid, und
   b2) mindestens einem Starter ausgewählt aus der Gruppe bestehend aus o-Toluoldiamin, Sucrose, Monoethylenglycol, Glycerin, Sorbit, Trimethylolpropan und Propylenglycol,
(iii) 0 bis 10 Gew.-% Polyetherpolyolen mit einer OH-Zahl von 350 bis 550 mg KOH/g, einer zahlenmittleren Funktionalität f von 4 bis 6, wobei die Polyetherpolyole erhältlich sind aus den Reaktionskomponenten bestehend aus
   b1) Propylenoxid und
   b2) mindestens einem Starter ausgewählt aus der Gruppe bestehend aus o-Toluoldiamin, Sucrose, Monoethylenglycol, Glycerin, Sorbit, Trimethylolpropan und Propylenglycol,
(iv) 30 bis 60 Gew.-% Polyesteretherpolyolen mit einer OH-Zahl von 250 bis 350 mg KOH/g und einer zahlenmittleren Funktionalität f von 1,9 bis 2,1 und
(v) 0 bis 30 Gew.-% Glycerin,
wobei die Summe der Komponenten (i), (ii), (iii), (iv) und (v) 100 Gew.-% beträgt.

Bevorzugt sind Gemische, wobei die Polyesterpolyole (i) erhältlich sind aus den Reaktionskomponenten bestehend aus
a1) Bernsteinsäure,
a2) mindestens einer Dihydroxyverbindung ausgewählt aus der Gruppe bestehend aus Monoethylenglykol, Diethylenglykol und Polyethylenglykol und
a3) Glycerin.

Bevorzugt sind auch Gemische, wobei die Polyetherpolyole (ii) erhältlich sind aus den Reaktionskomponenten bestehend aus
b1) 100 Gew.-% Ethylenoxid und
b2) mindestens einem Starter ausgewählt aus der Gruppe bestehend aus Sucrose, Monoethylenglykol und Propylenglykol.

Weiterhin bevorzugt sind Gemische, die 0,2 - 28 Gew.-%, mehr bevorzugt 0,3 - 25 Gew.-%, noch mehr bevorzugt 0,4 - 20 Gew.-% Glycerin enthalten.

Besonders bevorzugt sind erfindungsgemäße Gemische, bei denen der Massenbruch α an CO₂ in den Gemischen bei einer Temperatur von 35 °C und einem Druck von 120 bar weniger als 0,16, noch mehr bevorzugt weniger als 0,12 beträgt.

Ein weiterer Gegenstand der Erfindung sind Polyurethanschaumstoffe, die erhältlich sind aus der Reaktion von
A) mindestens einem organischen Polyisocyanat mit
B) einem erfindungsgemäßen Gemisch,
in Gegenwart von
C) einem oder mehr als einem Katalysator,
D) einem oder mehr als einem Tensid,
E) überkritischem CO₂
F) gegebenenfalls einem oder mehreren Hilfs- und/oder Zusatzmittel,
G) gegebenenfalls einem oder mehreren physikalischen Treibmittel,
wobei das Verhältnis der NCO-Gruppen aus Komponente (A) zu den OH-Gruppen aus Komponente (B) 0,9 :1 bis 1,1:1 beträgt.

Ein weiterer Gegenstand der Erfindung ist ein Verfahren zur Herstellung der erfindungsgemäßen Polyurethanschaumstoffe, umfassend die Schritte
i) Vermischen von einer mit Isocyanaten reaktiven Polyolformulierung bestehend aus den Komponenten B), C), D) und gegebenenfalls F) mit überkritischem CO₂ und gegebenenfalls physikalischen Treibmitteln, um eine Vormischung zu erhalten,
ii) Vermischen der in i) erhaltenen Vormischung mit einem organischen Polyisocyanat A) in einem Hochdruckmischkopf, um eine Polyurethan-Reaktivmischung zu erhalten,
iii) Einbringen der in ii) erhaltenen Polyurethan-Reaktivmischung in eine geschlossene Form bei einem Druck von ≥73,7 bar und ≤350 bar und einer Temperatur von ≥30,9 °C und ≤100 °C, wobei die geschlossene Form so eingerichtet ist, dass deren inneres Volumen und/oder der in ihrem Inneren herrschende Druck nach dem Einbringen der Mischung durch externe Beeinflussung verändert werden können,
iv) Verweilenlassen der in ii) erhaltenen Polyurethan-Reaktivmischung in der geschlossenen Form für eine Zeitdauer von ≥ 0,1 Sekunden,
v) Vergrößern des inneren Volumens der geschlossenen Form und/oder Verringern des im Inneren der geschlossenen Form herrschenden Drucks durch externe Beeinflussung, um ein Produkt zu erhalten, und
vi) Entformen des in v) erhaltenen Produkts.

Ein weiterer Gegenstand der Erfindung ist die Verwendung der erfindungsgemäßen Polyurethanschaumstoffe zur thermischen Isolierung.

Bevorzugt handelt es sich bei den erfindungsgemäßen Polyurethanschäumen und Polyurethanschaumstoffen um Polyurethanhartschäume beziehungsweise Polyurethanhartschaumstoffe.

In dieser Anmeldung verwendete Bezeichnungen haben die folgende Bedeutung:
Mit "Molgewicht" oder "Molmasse" bzw. "Mₙ" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

CO₂-Löslichkeit bezeichnet den Massenbruch α des in dem erfindungsgemäßen Gemisch gelösten CO₂, d.h. den Massenbruch α des in der Polyol-Mischung gelösten CO₂.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mₙ von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 Zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mₙ von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Die Herstellung geeigneter Polyetheresterpolyole ist unter anderem in der WO 2010/043624 A und in der EP 1 923 417 A beschrieben.

Polyetherpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 40 mol-%. Der Einsatz von 100 mol-% Ethylenoxid ist ebenfalls eine bevorzugte Ausführungsform.

Hilfs- und Zusatzmittel F), die in dem erfindungsgemäßen Verfahren eingesetzt werden können, sind die aus dem Stand der Technik und dem Fachmann bekannten und üblichen Hilfs- und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und/oder bakteriostatisch wirkende Substanzen.

Als optionale Stabilisatoren können gesättigte und ungesättigte Kohlenwasserstoffe wie Paraffine, Polybutadiene, Fettalkohole sowie Ester, z.B. Ester von Carbonsäuren, eingesetzt werden.

Weiterhin werden Tenside D) eingesetzt, beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren. Bevorzugt werden einbaubare Tenside D) verwendet.

Bevorzugt enthält die Komponente B) insgesamt maximal 40 Gew.-% Tenside, bevorzugt maximal 30 Gew.-%, an Tensiden, bezogen auf das Gesamtgewicht der Komponente B).

Für die Herstellung des Polyurethan(PUR)-Schaums werden ein oder mehr als ein Katalysator C) eingesetzt. Als Katalysator werden üblicherweise Verbindungen verwendet, welche die Reaktion der isocyanatreaktiven Gruppen enthaltenden Verbindungen der Komponente B) mit den Isocyanatgruppen der Komponente A) beschleunigen.

Die Katalysatoren enthalten vorzugsweise mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind beispielsweise Bis-dimethylaminopropylharnstoff, Bis(N,N-Dimethylaminoethoxyethyl)carbamat, Di-methylamino-propylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethylaminopropyl-N,N-dimethylpropan-1,3-diamin, Dimethyl-2-(2-amino-ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(amino-ethylether), 3-Dimethylaminoisopropyl-diisopropanolamin oder Mischungen davon.

Daneben können eine oder mehrere weitere Katalysatorverbindung, insbesondere die für die PUR-Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexahydrotriazin, Tetramethyl-ammoniumhydroxid, Natriumacetat, Natriumoctoat, Kaliumacetat, Kaliumoctoat, Natriumhydroxid.

Die Katalysatoren werden im Allgemeinen in einer Menge von 0,001 bis 5 Gew.-%, insbesondere von 0,05 bis 2,5 Gew.-% bezogen auf das Gewicht der Komponente B), eingesetzt. Besonders bevorzugt werden als Katalysatoren sowohl einbaubare Katalysatoren und nicht einbaubare Katalysatoren eingesetzt.

In der Herstellung des Polyurethanschaums wird überkritisches Kohlendioxid (CO₂) E) eingesetzt, und gegebenenfalls wird ein oder mehr als ein zusätzliches physikalisches Treibmittel G) verwendet. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren.

Die Komponente A) ist ein Polyisocyanat, also ein Isocyanat mit einer NCO-Funktionalität von ≥ 2. Beispiele solcher geeigneter Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Isocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO-Funktionalität f > 2 aufweisen und folgende Strukturformel aufweisen: C₁₅H₁₀N₂O₂ [C₈H₅NO]ₙ, wobei n = ganze Zahl > 0, bevorzugt n = 1, 2, 3 und 4, ist. Höherkernige Homologe C₁₅H₁₀N₂O₂ [C₈H₅NO]ₘ, m = ganze Zahl ≥ 4) können ebenfalls im Gemisch aus organischen Polyisocyanaten a) enthalten sein.

Statt oder zusätzlich zu den oben genannten Polyisocyanaten können auch geeignete NCO-Präpolymere als organische Isocyanatkomponente A) eingesetzt werden. Die Präpolymere sind herstellbar durch Umsetzung eines oder mehrerer Polyisocyanate mit einem oder mehreren der vorgenannten Polyole.

Der NCO-Gehalt im Polyisocyanat A) beträgt bevorzugt von ≥ 29,0 Gew.-% bis ≤ 32,0 Gew.%, und weist bevorzugt eine Viskosität bei 25 °C von ≥ 80 mPas bis ≤ 2000 mPas, besonders bevorzugt von ≥ 100 mPas bis ≤ 800 mPas auf (dynamische Viskosität bestimmt nach DIN 53019, bei 25°C).

Die Vermischung der Komponenten des Reaktionsgemisches kann unter Druck in einem Hochdruck-Mischkopf erfolgen.

### Beispiele

### Verwendete Normen bzw. Messgeräte:

Bestimmung der Rohdichte: Schaumstoffe aus Kautschuk und Kunststoffen - Bestimmung der Rohdichte (ISO 845:2006); Deutsche Fassung DIN EN ISO 845:2009

Bestimmung der Offenzelligkeit: Bestimmung des Volumenanteils offener und geschlossener Zellen (ISO 4590:2002); Deutsche Fassung DIN EN ISO 4590:2003

Bestimmung der OH-Zahl: Die Bestimmung der Hydroxylzahl - Teil 1: Verfahren ohne Katalysator gemäß DIN 53240-2; Fassung vom November 2013
Die Misch-OH-Zahl wurde berechnet bezogen auf alle Komponenten B), C), D) und gegebenenfalls F), um die benötigte Menge an Komponente A) zu bestimmen.

Bestimmung der Säurezahl: Bestimmung der partiellen Säurezahl und der Gesamtsäurezahl gemäß DIN EN ISO 2114:2000, Deutsche Fassung DIN EN ISO 2114:2000

Bestimmung der Viskosität: Dynamische Viskosität: Rheometer MCR 51 der Firma Anton Paar entsprechend DIN 53019-1 (Fassung vom September 2008) mit einem Messkegel CP 50-1, Durchmesser 50 mm, Winkel 1° bei Scherraten von 25, 100, 200 und 500 s⁻¹. Die erfindungsgemäßen und nicht erfindungsgemäßen Polyole zeigen von der Scherrate unabhängige Viskositätswerte.

Bestimmung der Zellgröße: Lichtmikroskopische Auswertung via Lichtmikroskop VHX 5000; Der zu vermessende Probekörper wird an 3 unterschiedlichen Stellen jeweils über einen kreisförmigen Bereich mit einem Durchmesser von 5 mm untersucht. Hierbei wird die Auflösung so gewählt, dass der ausgewählte Bereich mehr als 100 Zellen erfasst. Danach werden alle Zellen mit der frei erhältlichen Software ImageJ ausgewertet und aus den erhaltenen ECD Werten (Equivalent Circle Diameter) der D90 Wert (90% der Zellen sind kleiner als dieser Wert) sowie der durchschnittliche Zelldurchmesser berechnet.

Bestimmung der CO₂-Löslichkeit: Die Löslichkeitsgrenze des CO₂ in Polyol äußert sich durch das Ausscheiden einer CO₂-reichen Phase. Daher wurde die Löslichkeit von CO₂ in Polyol durch das Messen des Phasendiagramms als Funktion von Druck, Temperatur und Zusammensetzung bestimmt, wobei die Zusammensetzung durch den Massenbruch α von CO₂ in der Polyol/CO₂-Mischung angegeben wurde. Die Experimente wurden mit einer Hochdruckzelle durchgeführt, deren Beschreibung folgendem Artikel entnommen werden kann: M. Schwan, L. G. A. Kramer, T. Sottmann and R. Strey, Phys. Chem. Chem. Phys, 12, 6247 (2010).
Zur Präparation einer Probe mit bestimmtem Massenbruch α an CO₂ in der Polyol/CO₂-Mischung, wurde zunächst ein Rührmagnet in den Saphirzylinder der Hochdruckzelle gegeben. Anschließend wurde das Polyol mit einer Genauigkeit von Δm = ± 0,0001 g von oben in den Zylinder eingewogen. Dann wurde die Zelle mit dem Stempel verschlossen und aus einem Membranspeicher flüssiges CO₂ bei 20 °C über die Kapillare in den Saphirzylinder gefüllt. Dabei definiert die Position des Stempels die Menge des zugegebenen CO₂, die durch das Wiegen der Hochdruckzelle vor und nach dem Befüllen mit einer Genauigkeit von Δm = ± 0,01 g bestimmt wurde.
Zur Bestimmung der Phasengrenze, d.h. der CO₂-Löslichkeit im Polyol, wurde die befüllte Hochdruckzelle in ein Wasserbad gestellt, dessen Temperatur von einem Thermostat geregelt und mit einem Digitalthermometer mit einer Genauigkeit von Δ*T* = ± 0,01 K gemessen wurde. Um die Phasengrenze einer Probe mit bestimmtem Massenbruch α für einen bestimmten konstanten Druck zu messen, wurde die Temperatur des Wasserbads mit Hilfe des Thermostaten geregelt und die Probe gerührt, bis der gewünschte Druck und die gewünschte Temperatur eingestellt sind. Anschließend wurde der eingestellte Phasenzustand mit Hilfe einer Mikroskopierleuchte hinter dem Wasserbad visuell bestimmt und dokumentiert. Um kinetische Effekte bei Bildung einer neuen Phase zu vermeiden wurde die Phasengrenze (CO₂-Löslichkeit) vom zweiphasigen zum einphasigen Phasenzustand gemessen. Die Phasengrenze bzw. Löslichkeit des CO₂ in Polyol kann so mit einer Genauigkeit von Δα = ± 0,005 mit Δ*T* = ± 0,1 K und Δ*p* = ± 2 bar bestimmt werden. Der mit dieser Methode zugängliche Messbereich beträgt 10 bis 90 °C und 1 bis 400 bar.

Gemäß den in der nachfolgenden Tabelle 1 aufgeführten Rezepturen wurden CO₂ getriebene Polyurethanhartschäume hergestellt. Wenn nicht anders vermerkt, sind Mengenangaben als Gewichtsteile zu verstehen. Es kamen folgende Stoffe und Materialien zum Einsatz:
- Polyol 1:: Polyetherpolyol auf Basis von Sucrose, Propylenglycol, Monoethylenglycol und Propylenoxid mit einer Hydroxylzahl von 450 mg KOH/g, einer Funktionalität f von 4,7 und einer Viskosität von 15.000 mPa·s bei 25 °C
- Polyol 2:: Polyetherpolyol auf Basis von 26,7 Gew.-% Sucrose, 4,5 Gew.-% Propylenglycol, 2,3 Gew.-% Monoethylenglycol und 66,5 Gew.-% Ethylenoxid mit einer Hydroxylzahl von 450 mg KOH/g, einer Funktionalität f von 4,7 und einer Viskosität von ca. 2.900 mPa·s bei 25 °C
- Polyol 3:: Polyetheresterpolyol auf Basis von Phthalsäureanhydrid, Diethylenglycol, Ethylendiamin, Propylenoxid und Ethylenoxid mit einer Hydroxylzahl von 310 mg KOH/g, einer Funktionalität f von 2 und einer Viskosität von 6.500 mPa·s bei 25 °C
- Polyol 4:: Polyetherpolyol auf Basis von o-Toluylendiamin, 45 Gew.-% Ethylenoxid und Propylenoxid 55 Gew.-%, jeweils bezogen auf die Gesamtmenge an Alkylenoxid, mit einer Hydroxylzahl von 470 mg KOH/g, einer Funktionalität f von 4 und einer Viskosität von 8.000 mPa·s bei 25 °C
- Polyol 5:: Polyetherpolyol auf Basis von o-Toluylendiamin und Propylenoxid mit einer Hydroxylzahl von 400 mg KOH/g, einer Funktionalität f von 4 und einer Viskosität von 25.200 mPa·s bei 25 °C
- Polyol 6:: Polyesterpolyol auf Basis von 33,6 Gew.-% Bernsteinsäure, 6,6 Gew.-% Diethylenglycol, 15,2 Gew.-% Glycerin und 44,5 Gew.-% Polyethylenglycol 200 mit einer Hydroxylzahl von ca. 309 mg KOH/g, einer Funktionalität f von 3, einer Viskosität von ca. 2.300 mPa·s bei 25 °C und einer Säurezahl von < 1,0 mg KOH/g.
- Tegostab B 8476:: Schaumstabilisator (der Fa. Evonik) auf Silikonbasis
- Desmorapid® PV:: Katalysator, Pentamethyldiethylentriamin (der Fa. Covestro Deutschland AG)
- Polycat® 41:: Katalysator, N,N,N',N',N",N"-Hexamethyl-1,3,5-triazin-1,3,5(2H,4H,6H)-tripropanamin (der Fa. Evonik)
- Isocyanat:: Gemisch aus monomerem und polymerem MDI mit einer Viskosität von 290 mPa·s bei 20 °C (Desmodur® 44V20L, Fa. Covestro Deutschland AG)
- Tensid:: Polyethertrisiloxan entsprechend der Struktur in CAS-Nr. 67674-67-3 mit n = 5 - 10.

### Herstellung von Polyurethanhartschaumstoffen, Beispiele 1-3 und Vergleichsbeispiel:

Auf einer Hochdruckanlage wurde eine Polyolformulierung aus den in der nachfolgenden Tabelle 1 aufgeführten Polyolen, Stabilisatoren und Katalysatoren hergestellt. Diese Formulierung wurde mit einem Statikmischer bei einem Druck von 160 bar und einer Temperatur von 55 °C mit dem Treibmittel CO₂ (überkritische Bedingungen) vermischt. Hierbei wurde die Menge an überkritischem CO₂ so gewählt, dass der Wert α über der experimentell bestimmten CO₂-Löslichkeit in der jeweiligen Komponente B) (Gemisch von Polyolen) lag, um ungelöstes CO₂ vorliegen zu haben, welches als Tröpfchen mit Durchmessern von wenigen nm in einer Polyol/CO₂/Tensid-Mikroemulsion emulgiert werden kann.

In einem Hochdruckmischkopf wurde diese Mischung mit dem Isocyanat, das mit einem Druck von 160 bar und einer Temperatur von 35 °C gefördert wurde, vermischt. Das so erhaltene Reaktionsgemisch, dessen Temperatur bei etwa 45 °C lag, wurde in eine unter Druck stehende Form mit einer Formtemperatur von 45 °C injiziert. Nach Ende der Injektion (sogenannte Schusszeit) wurde der Druck eine Zeit lang (sogenannte Liegezeit) gehalten und dann innerhalb von < 2 s auf Umgebungsdruck entspannt (sogenannte Entspannungsdauer). Die genaue Rezeptur, die Anlagenparameter und die Ergebnisse der physikalischen Untersuchungen der Schäume sind in Tabelle 1 zusammengefasst.

**Tabelle 1**

| | | **Beispiel 1** | **Beispiel 2** | **Beispiel 3** | **Vergleichsbeispiel** |
|---|---|---|---|---|---|
| Polyol 1 | [Gew.-Teile] | | | | 40 |
| Polyol 2 | [Gew.-Teile] | | 40 | 40 | |
| Polyol 3 | [Gew.-Teile] | 40 | 40 | 40 | 40 |
| Polyol 4 | [Gew.-Teile] | 12 | 12 | | 12 |
| Polyol 5 | [Gew.-Teile] | 8 | | | 8 |
| Polyol 6 | [Gew.-Teile] | 36,25 | 7,60 | | |
| Glycerin | [Gew.-Teile] | 3,75 | 0,40 | 20 | |
| Summe Polyole 1-6 | [Gew.-Teile] | 100 | 100 | 100 | 100 |
| Tegostab B8476 | [Gew.-Teile] | 2 | 2 | 2 | 2 |
| Polycat® 41 | [Gew.-Teile] | 0,49 | 0,37 | 0,37 | 0,49 |
| Desmorapid® PV | [Gew.-Teile] | 0,99 | 0,74 | 0,74 | 0,99 |
| Tensid | [Gew.-Teile] | 30,44 | 28,66 | 28,64 | 32,34 |
| Misch-OHZ | [mg KOH/g ] | 312 | 315 | 527 | 308 |
| überkritisches CO₂ (α) | [Gew.- Teile] ([m%/m%]) | 16,97 (0,141) | 14,68 (0,125) | 11,46 (0,100) | 26,02 (0,201) |
| Isocyanat | [Gew.-Teile] | 106,94 | 102,76 | 222,11 | 114,79 |
| Index | NCO/OH | 107,2 | 103,5 | 133,9 | 115,0 |
| Mischtemperatur | [°C] | 35 | 45 | 45 | 45 |
| Gasgegendruck in der Kavität | [bar] | 90 | 90 | 90 | 80 |
| Schusszeit | [s] | 3,0 | 2,9 | 2,5 | 2,9 |
| Liegezeit | [s] | 7,0 | 7,9 | 5,5 | 8,0 |
| CO₂-Löslichkeit in der Polyolformulierung bei 35 °C und 120 bar | [m%/m%] | 0,100 | 0,110 | 0,090 | 0,180 |
| CO₂-Löslichkeit in der Polyolformulierung bei 60 °C und 120 bar | [m%/m%] | 0,070 | 0,065 | 0,070 | 0,100 |
| Rohdichte | [kg/m³] | 64 | 144 | 125 | 53 |
| Offenzelligkeit | [%] | 7,1 | 14,6 | 36,0 | 5,3 |
| durchschnittliche Zellgröße | [µm] | 56 | 41 | 82 | 157 |
| D90 | [µm] | 84 | 64 | 118 | 224 |

Es zeigte sich, dass die CO₂-Löslichkeiten der Polyolformulierungen in den erfindungsgemäßen Beispielen wesentlich niedriger sind als im Vergleichsbeispiel. Dies führte dazu, dass auch mit niedrigeren CO₂-Mengen gearbeitet werden konnte. Es zeigte sich zudem, dass die durchschnittlichen Zellgrößen in den erfindungsgemäßen Beispielen deutlich niedriger sind als im Vergleichsbeispiel.

## Patentansprüche

1. Gemisch aus Polyurethanreaktionskomponenten bestehend aus
(i) 0 bis 50 Gew.-% Polyesterpolyolen mit einer OH-Zahl von 200 bis 450 mg KOH/g, einer zahlenmittleren Funktionalität f von 2,2 bis 4,5 und einer Säurezahl von <6 mg KOH/g, wobei die Polyesterpolyole erhältlich sind aus den Reaktionskomponenten bestehend aus
a1) mindestens einer Dicarbonsäure ausgewählt aus der Gruppe bestehend aus Bernsteinsäure, Glutarsäure, Malonsäure, Äpfelsäure und Weinsäure
a2) mindestens einer Dihydroxyverbindung ausgewählt aus der Gruppe bestehend aus Monoethylenglykol, Diethylenglykol und Polyethylenglykol und
a3) mindestens einer Polyhydroxylverbindung ausgewählt aus der Gruppe bestehend aus Glycerin, Trimethylolpropan, Pentaerythrit und Sorbit
(ii) 10 bis 60 Gew.-% Polyetherpolyolen mit einer OH-Zahl von 350 bis 550 mg KOH/g, einer zahlenmittleren Funktionalität f von 4 bis 6, wobei die Polyetherpolyole erhältlich sind aus den Reaktionskomponenten bestehend aus
b1) 40 bis 100 Gew.-% Ethylenoxid und 0 bis 60 Gew.-% Propylenoxid, jeweils bezogen auf die Gesamtmenge an Alkylenoxid, und
b2) mindestens einem Starter ausgewählt aus der Gruppe bestehend aus o-Toluoldiamin, Sucrose, Monoethylenglycol, Glycerin, Sorbit, Trimethylolpropan und Propylenglycol,
(iii) 0 bis 10 Gew.-% Polyetherpolyolen mit einer OH-Zahl von 350 bis 550 mg KOH/g, einer zahlenmittleren Funktionalität f von 4 bis 6, wobei die Polyetherpolyole erhältlich sind aus den Reaktionskomponenten bestehend aus
b1) Propylenoxid und
b2) mindestens einem Starter ausgewählt aus der Gruppe bestehend aus o-Toluoldiamin, Sucrose, Monoethylenglycol, Glycerin, Sorbit, Trimethylolpropan und Propylenglycol,
(iv) 30 bis 60 Gew.-% Polyesteretherpolyolen mit einer OH-Zahl von 250 bis 350 mg KOH/g und einer zahlenmittleren Funktionalität f von 1,9 bis 2,1 und
(v) 0 bis 30 Gew.-% Glycerin,
wobei die Summe der Komponenten (i), (ii), (iii), (iv) und (v) 100 Gew.-% beträgt.

2. Gemisch gemäß Anspruch 1, wobei
die Polyesterpolyole (i) eine OH-Zahl von 250 bis 400 mg KOH/g, eine zahlenmittlere Funktionalität f von 2,5 bis 3,5, bevorzugt von 2,8 bis 3,2 und eine Säurezahl von <3 mg KOH/g, bevorzugt < 1 mg KOH/g aufweisen.

3. Gemisch gemäß einem der Ansprüche 1 oder 2,
wobei die Polyetherpolyole (ii) eine OH-Zahl von 400 bis 500 mg KOH/g und eine zahlenmittlere Funktionalität f von 4,5 bis 5 aufweisen.

4. Gemisch gemäß einem der Ansprüche 1 bis 3,
die Polyesterpolyole (i) eine OH-Zahl von 250 bis 400 mg KOH/g, eine zahlenmittlere Funktionalität f von 2,8 bis 3,2 und eine Säurezahl von < 1 mg KOH/g aufweisen und
die Polyetherpolyole (ii) eine OH-Zahl von 400 bis 500 mg KOH/g und eine zahlenmittlere Funktionalität f von 4,5 bis 5 aufweisen.

5. Gemisch gemäß einem der Ansprüche 1 bis 4, wobei die Polyesterpolyole (i) erhältlich sind aus den Reaktionskomponenten bestehend aus
a1) Bernsteinsäure,
a2) mindestens einer Dihydroxyverbindung aus der Gruppe bestehend aus Monoethylenglykol, Diethylenglykol und Polyethylenglykol und
a3) Glycerin.

6. Gemisch gemäß einem der Ansprüche 1 bis 5, wobei die Polyetherpolyole (ii) erhältlich sind aus den Reaktionskomponenten bestehend aus
b1) 100 Gew.-% Ethylenoxid und
b2) mindestens einem Starter ausgewählt aus der Gruppe bestehend aus Sucrose, Monoethylenglykol und Propylenglykol.

7. Gemisch gemäß einem der Ansprüche 1 bis 6, wobei das Gemisch 0,2 bis 28 Gew.-%, bevorzugt 0,3 bis 25 Gew.-%, am meisten bevorzugt 0,4 bis 20 Gew.-% Glycerin enthält.

8. Gemisch gemäß einem der Ansprüche 1 bis 7, wobei der Massenbruch α des CO₂ in dem Gemisch bei einer Temperatur von 35 °C und einem Druck von 120 bar weniger als 0,16, bevorzugt weniger als 0,12 beträgt.

9. Polyurethanschaumstoffe erhältlich aus der Reaktion von
A) mindestens einem organischen Polyisocyanat mit
B) einem Gemisch gemäß einem der Ansprüche 1 bis 8,
in Gegenwart von
C) einem oder mehr als einem Katalysator,
D) einem oder mehr als einem Tensid,
E) überkritischem CO₂,
F) gegebenenfalls einem oder mehreren Hilfs- und /oder Zusatzmitteln,
G) gegebenenfalls einem oder mehreren physikalischen Treibmitteln,
wobei das Verhältnis der NCO-Gruppen aus Komponente (A) zu den OH-Gruppen aus Komponente (B) 0,9:1 bis 1,1:1 beträgt.

10. Verfahren zur Herstellung der Polyurethanschaumstoffe gemäß Anspruch 9, umfassend die Schritte
i) Vermischen von einer mit Isocyanaten reaktiven Polyolformulierung bestehend aus den Komponenten B) Gemisch gemäß einem der Ansprüche 1 bis 8, C) einem oder mehr als einem Katalysator, D) einem oder mehr als einem Tensid und gegebenenfalls F) einem oder mehreren Hilfs- und/oder Zusatzmitteln mit E) überkritischem CO₂ und gegebenenfalls G) einem oder mehreren physikalischen Treibmitteln, um eine Vormischung zu erhalten,
ii) Vermischen der in i) erhaltenen Vormischung mit A) mindestens einem organischen Polyisocyanat in einem Hochdruckmischkopf, um eine Polyurethan-Reaktivmischung zu erhalten,
iii) Einbringen der in ii) erhaltenen Polyurethan-Reaktivmischung in eine geschlossene Form bei einem Druck von ≥73,7 bar und ≤350 bar und einer Temperatur von ≥30,9 °C und ≤100 °C, wobei die geschlossene Form so eingerichtet ist, dass deren inneres Volumen und/oder der in ihrem Inneren herrschende Druck nach dem Einbringen der Mischung durch externe Beeinflussung verändert werden können,
iv) Verweilenlassen der in ii) erhaltenen Polyurethan-Reaktivmischung in der geschlossenen Form für eine Zeitdauer von ≥ 0,1 Sekunden,
v) Vergrößern des inneren Volumens der geschlossenen Form und/oder Verringern des im Inneren der geschlossenen Form herrschenden Drucks durch externe Beeinflussung, um ein Produkt zu erhalten, und
vi) Entformen des in v) erhaltenen Produkts.

11. Verwendung der Polyurethanschaumstoffe gemäß Anspruch 9 zur thermischen Isolierung.
